# EUROPÄISCHE PATENTSCHRIFT

(11) **EP 0 491 221 B1**
(45) Veröffentlichungstag und Bekanntmachung des Hinweises auf die Patenterteilung: **20.07.1994**
(21) Anmeldenummer: 91120721.5
(22) Anmeldetag: 03.12.1991
(51) Int. Cl.: B60K 17/22, F16D 3/30

(54) **Drehmomentenübertragende Gelenkverbindung, vorzugsweise für Antriebshalbwellen oder mehrteilige Kardanwellen von Kraftfahrzeugen**
Torque transmitting connection joint, especially for demi-axles or multiple-part cardan propeller shafts
Joint articulé de transmission de couple, de préférence pour demi-arbres ou pour arbres cardan à plusieurs parties

(30) Priorität: 15.12.1990 DE 4040152
(43) Veröffentlichungstag der Anmeldung: 24.06.1992
(73) Patentinhaber: Volkswagen Aktiengesellschaft, 38436 Wolfsburg (DE)
(72) Erfinder: Ilsemann, Bernhard, W-3301 Weddel (DE)

(56) Entgegenhaltungen:
- GB-A- 2 068 506
- US-A- 3 788 100
- US-A- 3 899 898
- US-A- 4 440 256
- US-A- 4 460 058

## Beschreibung

Die Erfindung bezieht sich auf eine drehmomentenübertragende Gelenkverbindung, vorzugsweise für Antriebshalbwellen oder mehrteilige Kardanwellen von Kraftfahrzeugen der im Oberbegriff des Patentanspruchs 1 genannten Art, wie sie allgemein und u. a. auch aus der DE-PS 35 06 727, Fig. 1 bekannt sind.

Derartige Gelenkverbindungen enthalten im allgemeinen ein Gleichlaufgelenk, dessen Außenkörper mit einem Verbindungsflansch eines ersten Wellenteils verschraubt ist und dessen mit dem Außenkörper über drehmomentenübertragende Kugelkörper o. ä. gekoppelter Innenkörper (Innennabe) über eine Steck- bzw. Keilverzahnung drehmomentenschlüssig mit dem benachbarten zweiten Wellenteil verbunden ist, wobei das freie Ende dieses Wellenteils eine Außenverzahnung und der Innenkörper bzw. die Innennabe des Gleichlaufgelenks eine damit korrespondierende Innenverzahnung aufweist.

Derartige drehmomentenübertragende Gelenkverbindungen mit einer den Innenkörper des Gleichlaufgelenks mit dem zugeordneten Wellenteil drehmomentenschlüssig verbindenden Steck- bzw. Keilverzahnung haben sich im Automobilbau in der Praxis bewährt.

Die Antriebsleistung und die Antriebsmomente der Kraftfahrzeugmotoren sind im Laufe der Kraftfahrzeugentwicklung ständig größer geworden. Entsprechend wuchs auch die materialmäßige Beanspruchung solcher drehmomentenübertragender Gelenkverbindungen.

Der Erfindung liegt nun die Aufgabe zugrunde, eine drehmomentenübertragende Gelenkverbindung der im Oberbegriff des Patentanspruchs 1 genannten Art derart auszubilden, daß sie ohne Vergrößerung ihrer äußeren Abmessungen größere Antriebsmomente als sonst üblich übertragen kann.

Diese Aufgabe wird erfindungsgemäß durch die Merkmale des Patentanspruchs 1 gelöst. Vorteilhafte Ausgestaltungen und Weiterbildungen der Erfindung sind in den Unteransprüchen angegeben.

Erfindungsgemäß wird die drehmomentenfeste Verbindung des Innenkörpers bzw. der Innennabe des Gleichlaufgelenks mit dem zugeordneten Wellenteil nicht mehr wie allgemein üblich mittels einer Steck- bzw. Keilverzahnung, sondern mittels einer formschlüssigen Stirnverzahnung realisiert.

Durch die Verwendung einer Stirnverzahnung wird für die drehmomentenübertragende Verbindung zwischen Wellenteil und Innenkörper bzw. Innennabe des Gleichlaufgelenks ein größerer Übertragungsdurchmesser nutzbar gemacht als bei Verwendung einer üblichen Steck- oder Keilverzahnung, wodurch die in der Verzahnung wirksamen Kräfte und damit auch die Materialbeanspruchung der Verzahnung entsprechend verringert werden.

Anhand eines in der Zeichnung schematisch dargestellten Ausführungsbeispiels wird die Erfindung nachstehend näher erläutert.

In der Zeichnung zeigen in zum Teil prinzipienhafter Darstellung
- Fig. 1: eine Ansicht von oben auf den mehrere drehmomentenübertragende Gelenkverbindungen aufweisenden Antrieb eines allradgetriebenen Kraftfahrzeuges und
- Fig. 2: eine erfindungsgemäß ausgebildete drehmomentenübertragende Gelenkverbindung dieses Antriebes im Teillängsschnitt und größerem Maßstab.

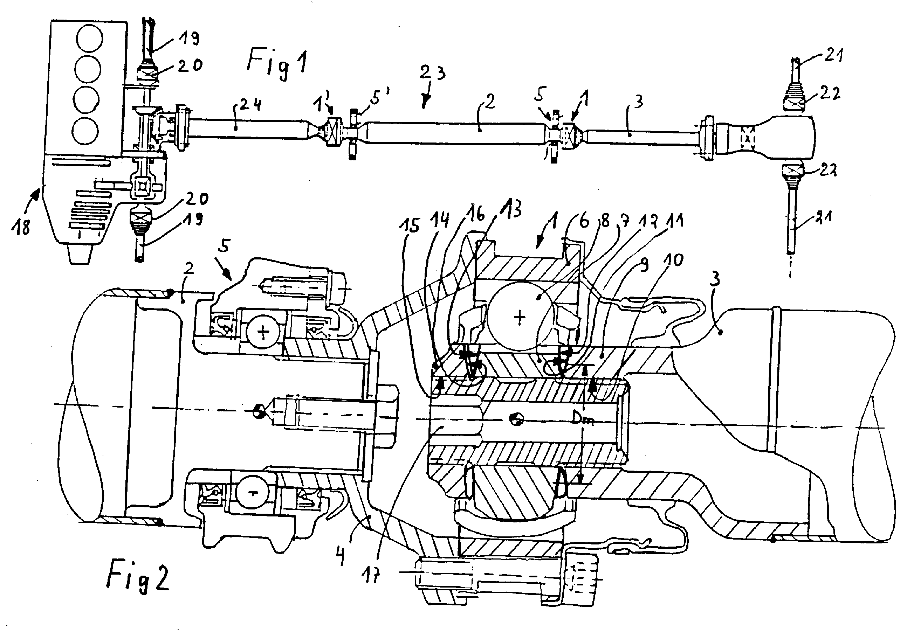

Der in Fig. 1 nur prinzipienhaft dargestellte Allradantrieb eines nicht näher dargestellten Personenkraftfahrzeugs enthält u. a. ein aus Verbrennungsmotor und Getriebe bestehendes quer eingebautes Antriebsaggregat 18, von dem über vordere Antriebshalbwellen 19 die nicht weiter dargestellten Vorderräder und über hintere Antriebshalbwellen 21 die nicht weiter dargestellten Hinterräder angetrieben werden. Die Ankopplung der vorderen und hinteren Antriebshalbwellen an die jeweiligen Vorderachs- und Hinterachsdifferentiale bzw. deren Ausgangswellen etc. erfolgt über Gleichlaufgelenke 20 bzw. 22; der Antrieb der Hinterachse erfolgt über eine mehrteilige im dargestellten Ausführungsbeispiel dreiteilige Kardanwelle 23, deren drei Wellenteile 2, 3 und 24 jeweils über ein Gleichlaufgelenk 1 bzw. 1′ drehmomentenschlüssig miteinander verbunden sind, wobei jeweils in der Nähe dieser Gleichlaufgelenke Wälzlager o. ä. enthaltende Lagervorrichtungen 5, 5, vorgesehen sind, über welche der Kardanstrang am nicht weiter dargestellten Fahrzeugaufbau bzw. Fahrzeugchassis befestigt ist.

Das Gleichlaufgelenk 1 der erfindungsgemäßen drehmomentenübertragenden Gelenkverbindung enthält in üblicher Weise einen gehäuseförmigen Außenkörper 6, welcher drehmomentenfest mit einem ersten Wellenteil 2 verbunden ist und einen drehmomentenfest mit einem benachbarten zweiten Wellenteil 3 verbundenen nabenförmigen Innenkörper 7, welcher mit dem Außenkörper 6 über drehmomentenübertragende Kugelkörper 8 o. ä. gekoppelt ist.

Der Außenkörper 6 des Gleichlaufgelenks ist in üblicher Weise drehmomentenfest mit einem Befestigungsflansch 4 des ersten Wellenteils 2 verschraubt.

Die drehmomentenschlüssige Verbindung des nabenförmigen Innenkörpers 7 des Gleichlaufgelenks 1 mit dem zweiten Wellenteil 3 erfolgt dagegen erfindungsgemäß mittels einer formschlüssigen Stirnverzahnung und nicht - wie sonst allgemein üblich - mittels einer Steck- oder Keilverzahnung.

Das hohl ausgebildete Ende 9 des zweiten Wellenteils 3 trägt zu diesem Zweck eine mit 11 bezifferte, nur prinzipienhaft angedeutete erste Stirnverzahnung 11; der nabenförmige Innenkörper 7 des Gleichlaufgelenks liegt axial am Ende 9 des zweiten Wellenteils 3 an und trägt seinerseits auf seiner dem Wellenende zugekehrten Seite eine ebenfalls nur prinzipienhaft angedeutete und mit 12 bezifferte Stirnverzahnung, die mit der ersten Stirnverzahnung 11 des zweiten Wellenteils 3 korrespondiert und in diese formschlüssig eingreift. Durch eine Schraubverbindung sind der Innenkörper 7 und der zweite Wellenteil 3 axial fest miteinander verspannt, so daß sich eine sichere drehmomentenfeste Verbindung zwischen ihnen ergibt.

Dadurch, daß der nabenförmige Innenkörper 7 des Gleichlaufgelenks stirnseitig an das Wellenende 9 des zweiten Wellenteils 3 anliegt und nicht wie beim Stand der Technik auf das - dann im Durchmesser entsprechend dünner ausgeführte - Wellenende aufgeschoben und mittels einer Steckverzahnung mit diesem verbunden ist, ist für die Drehmomentenübertragung zwischen Innenkörper 7 und Wellenteil 3 ein mittlerer Durchmesser Dₘ wirksam, der spürbar größer ist als bei Anordnungen, bei denen die drehmomentenschlüssige Ankopplung über eine Steck- oder Keilverzahnung erfolgt. In Fig. 2 ist dieser mittlere Durchmesser prinzipienhaft angedeutet. Infolge dieser Durchmesservergrößerung sind die bei der Drehmomentenübertragung in der Stirnverzahnung 11/12 wirksamen Kräfte - gleiche Übertragungsmomente vorausgesetzt - im Vergleich zu den bei konventionellen Anordnungen in der Steckverzahnung wirksamen Kräften spürbar reduziert.

Mit Hilfe der erfindungsgemäßen Gelenkverbindungen wird es daher möglich, bei gleichen äußeren Abmessungen der Wellenteile und des Gleichlaufgelenks erheblich größere Antriebsmomente als sonst üblich zu übertragen, wie sie beispielsweise u. a. auch im Rallyesport benötigt und üblich sind.

Im dargestellten Ausführungsbeispiel ist nicht nur das dem zweiten Wellenteil zugekehrte stirnseitige Ende des nabenförmigen Innenkörpers 7 mit einer Stirnverzahnung versehen, sondern auch das von diesem Wellenteil abgekehrte stirnseitige Ende. Diese dritte Stirnverzahnung ist ebenfalls nur prinzipienhaft angedeutet und mit 13 beziffert. In die dritte Stirnverzahnung 13 greift ein axial am Innenkörper 7 anliegender Gewindering 14 o. ä. mit einer korrespondierenden vierten Stirnverzahnung 16 formschlüssig ein. Dieser Gewindering ist Teil der Verschraubung zum axialen Verspannen des Innenkörpers 7 mit dem zweiten Wellenteil 3.

Die eigentliche Verspannung dieser Bauelemente erfolgt mittels eines im Ausführungsbeispiel hülsenförmig ausgebildeten Gewindebolzens 17, dessen eine Ende ein nicht weiter beziffertes erstes Außengewinde und dessen anderes Ende ein ebenfalls nicht weiter beziffertes zweites Außengewinde mit einer von der Steigung des ersten Außengewindes verschieden großen Gewindesteigung trägt; der hülsenförmige Gewindebolzen 17 trägt also ein sogenanntes Differenzgewinde.

Im hohlen Ende 9 des zweiten Wellenteils ist nun ein mit dem ersten Außengewinde korrespondierendes erstes Innengewinde 10 und im Gewindering 14 ein mit dem zweiten Außengewinde korrespondierendes zweites Innengewinde 15 angeordnet. Durch den in das hohle Ende 9 des zweiten Wellenteils 3 eingeschraubten Gewindebolzen 17 werden daher der Gewindering 14, der Innenkörper 7 des Gleichlaufgelenks 1 und der zweite Wellenteil 3 axial fest miteinander verspannt, wobei die Übertragung vergleichsweise hoher Antriebsmomente durch die Stirnverzahnungen 11/12 und 13/14 beiderseits des Innenkörpers 7 gewährleistet ist.

Durch die Anordnung von Stirnverzahnungen auf beiden Seiten des nabenförmigen Innenkörpers 7 wird in vorteilhafter Weise - eine auf die Kugelkörperlaufeben bezogen - Symmetrierung der Drehmomentenübertragung bewirkt.

Die erfindungsgemäße drehmomentenübertragende Gelenkverbindung wurde anhand einer Gelenkverbindung im Zuge einer mehrteiligen Kardanwelle beschrieben. Die Erfindung ist nicht auf eine derartige Anordnung beschränkt. Es versteht sich, daß derartig ausgebildete Gelenkverbindungen grundsätzlich auch anderenorts eingesetzt werden können. Beispielsweise wäre es ohne weiteres denkbar, die in Fig. 1 angedeuteten vorderen und hinteren Gleichlaufgelenke 20 bzw. 22 der vorderen bzw. hinteren Antriebshalbwellen 19, 21 entsprechend auszubilden, wenn die drehmomentenmäßige Beanspruchung dieser Gelenkverbindungen dies erfordern würde.

## Patentansprüche

1. Drehmomentenübertragende Gelenkverbindung, vorzugsweise für Antriebshalbwellen oder mehrteilige Kardanwellen von Kraftfahrzeugen, mit einem Gleichlaufgelenk (1), dessen Außenkörper (6) drehmomentenfest mit einem ersten Wellenteil (2) o. ä. verbunden ist und dessen über Kugelkörper (8) o. ä. drehmomentenübertragend mit dem Außenkörper (6) gekoppelter Innenkörper (Innennabe 7) drehmomentenfest mit einem zweiten Wellenteil (3) verbunden ist,
dadurch gekennzeichnet, daß die drehmomentenfeste Verbindung des Innenkörpers (7) mit dem zweiten Wellenteil (3) mittels einer formschlüssigen Stirnverzahnung (11/12; 13/14) erfolgt.

2. Gelenkverbindung nach Anspruch 1,
dadurch gekennzeichnet, daß das hohl ausgebildete Ende (9) des zweiten Wellenteils (3) ein erstes Innengewinde (10) mit einer ersten Gewindesteigung sowie eine erste Stirnverzahnung (11) trägt, in die der axial am zweiten Wellenteil (3) anliegende Innenkörper (Innennabe 7) mit einer korrespondierenden zweiten Stirnverzahnung (12) formschlüssig eingreift, daß der Innenkörper (Innennabe 7) auf seiner vom zweiten Wellenteil (3) abgewandten Seite eine dritte Stirnverzahnung (13) trägt, in welche ein axial anliegender Gewindering (14) o. ä., der ein zweites Innengewinde (15) mit einer von der ersten Gewindesteigung verschieden großen zweiten Gewindesteigung trägt, mit einer korrespondierenden vierten Stirnverzahnung (16) formschlüssig eingreift,
und daß der Gewindering (14), der Innenkörper (7) und der zweite Wellenteil (3) durch einen sie axial durchgreifenden Gewindebolzen (17) o. ä. mit einem mit dem ersten und dem zweiten Innengewinde (10, 15) zusammenwirkenden Differenzgewinde axial fest zusammengespannt sind.

## Claims

1. Torque transmitting connecting joint, especially for half drive shafts or multi-part Cardan drive shafts of motor vehicles, having a homocinetic joint (1), of which the outer body (6) is connected in a torque resistant manner to a first shaft part (2) or the like and of which the inner body (inner hub 7), coupled in a torque transmitting manner to the outer body (6) by means of a spherical body (8) or the like, is connected in a torque resistant manner to a second shaft part (3), characterised in that the torque resistant connection of the inner body (7) to the second shaft part (3) is achieved by means of form-fit axial serrations (11/12; 13/16).

2. Connection joint according to claim 1, characterised in that the hollow-formed end (9) of the second shaft part (3) has a first inner thread (10) with a first thread pitch and first axial serrations (11) which are engaged in a form-fit manner with corresponding second axial serrations (12) by the inner body (inner hub 7) which lies axially at the second shaft part (3), that the inner body (inner hub 7), on its side remote from the second shaft part (3), has third axial serrations (13) which are engaged in a form-fit manner with corresponding fourth axial serrations (16) by an axially-lying threaded ring (14) or the like which has a second inner thread (15) with a second thread pitch of a different size to the first thread pitch, and that the threaded ring (14), the inner body (7) and the second shaft part (3) are clamped together in an axially fixed manner by a threaded bolt (17) or the like, which penetrates them axially, having a differential thread cooperating with the first and the second inner threads (10, 15).

## Revendications

1. Joint articulé de transmission de couple de rotation, de préférence pour demi-arbres moteurs ou arbres de cardan en plusieurs parties de véhicules automobiles comportant un joint homocinétique (1) dont le corps extérieur (6) est relié fixe en couple de rotation, avec une première partie d'arbre (2) ou similaire et dont le corps intérieur (moyeu intérieur 7), accouplé avec le corps extérieur (6) en transmission de couple de rotation, par des corps sphériques (8) ou similaires, est relié, fixe en couple de rotation, avec une deuxième partie d'arbre (3), caractérisé en ce que la liaison fixe en couple de rotation du corps intérieur (7) avec la deuxième partie d'arbre (3) s'effectue au moyen d'une denture frontale (11/12 ; 13/16) à concordance de forme.

2. Joint articulé selon la revendication 1, caractérisé en ce que l'extrémité (9) creuse de la deuxième partie d'arbre (3) porte un premier taraudage (10) avec un premier pas de filetage ainsi qu'une première denture frontale (11) dans laquelle s'engage, par concordance de forme, le corps intérieur (moyeu intérieur 7), s'appliquant axialement sur la deuxième partie d'arbre (3), avec une deuxième denture frontale (12) correspondante, en ce que le corps intérieur (moyeu intérieur 7) porte, sur son côté tourné à l'opposé de la deuxième partie d'arbre (3), une troisième denture frontale (13), dans laquelle s'engage, par concordance de forme, une bague filetée (14), ou similaire, s'appliquant axialement et portant un deuxième taraudage (15) avec un deuxième pas de filetage différent du premier pas, avec une quatrième denture frontale (16) correspondante, et en ce que la bague filetée (54), le corps intérieur (7) et la deuxième partie d'arbre (3) sont fixement serrés ensemble, axialement, par un boulon (17) ou similaire, les traversant axialement, avec un filetage différentiel coopérant avec le premier et le deuxième taraudage (10, 15).
